# EUROPEAN PATENT APPLICATION

(11) **EP 4 601 167 A1**
(43) Date of publication of application: **13.08.2025**
(21) Application number: 24156032.5
(22) Date of filing: 06.02.2024
(51) Int. Cl.: H02M 1/00, H02M 3/335, H02M 3/28

(54) **VOLTAGE TRANSFORMER AND CONTROL METHOD**

(71) Applicant: Hitachi Energy Ltd, 8050 Zürich (CH)
(72) Inventor: SIEMASZKO, Daniel, 1450 Ste-Croix (CH); KLAEUSLER, Martin, 5022 Rombach (CH)
(74) Representative: Epping - Hermann - Fischer

(57) **Abstract**

In at least one embodiment, the voltage transformer (1) comprises:
- an input series and output parallel, ISOP, connection (21) of input series and output series, ISOS, modules (32) and/or an ISOS connection (22) of ISOP modules (31), and
- control means (4),
wherein
- at least one of the ISOP modules (31) or the ISOS modules (32) comprises a plurality of solid-state transformers, SSTs (33), and
- the control means (4) are configured to perform a balancing control of intermediate voltages between individual ones of the SSTs (33) in the ISOS modules (32) of the ISOP connection (21) and/or between individual ones of the ISOP modules (31) in the ISOS connection (22).

## Description

A voltage transformer is provided. A method for controlling such a voltage transformer is also provided.

Document WO 2023/002040 A1 refers to solid-state transformers having an active bridge.

Documents US 2022/0278624 A1, US 2023/0178982 A1 and US 2023/0318435 A1 refer to solid-state power converters.

A problem to be solved is to provide a voltage transformer that can efficiently be configured in a modular manner.

This object is achieved, inter alia, by a voltage transformer and by a control method as defined in the independent claims. Exemplary further developments constitute the subject-matter of the dependent claims.

According to at least one embodiment, the voltage transformer comprises an input series and output parallel, ISOP, connection of input series and output series, ISOS, modules. Alternatively or additionally, the voltage transformer comprises an ISOS connection of ISOP modules. The two types of connections, that is, the at least one ISOP connection and the at least one ISOS connection, can be combined with each other, or there is just one pure ISOS connection or just one pure ISOP connection.

According to at least one embodiment, one or some or all the ISOP modules comprises one or a plurality of solid-state transformers, SSTs. Alternatively or additionally, one or some or all of the ISOS modules comprises one or a plurality of SSTs. It is possible that all the transformers of the ISOS modules and/or of the ISOP modules are SSTs. All the SSTs can be of the same type or different types of SSTs are combined with one another in the voltage transformer.

According to at least one embodiment, the voltage transformer comprises control means. It is possible that the control means are distributed across at least some of the ISOP modules and/or across the SSTs. Hence, the control means do not need to be a single unit but can be composed of a plurality of units.

The control means may also be referred to as a controller or as a control unit. For example, the controller is a converter controller or a part of a converter controller, the converter controller could take care of switching the SSTs, in particular. Hence, the terms 'control means', 'controller' or 'control unit' may be synonymous.

According to at least one embodiment, the control means are configured to perform a balancing control of intermediate voltages. For example, the intermediate voltages are present at balancing points. Thus, the balancing points may have the electric potential defined by the intermediate voltage, at least temporarily.

For example, balancing voltage control is done between the SSTs in the ISOS modules of the ISOP connection, that is, within the ISOS modules. In the case of the ISOS connection, balancing voltage control can be done between the ISOP modules.

According to at least one embodiment, the balancing voltages are present between individual ones of the SSTs in the ISOS modules of the ISOP connection. Alternatively or additionally, the balancing voltages are present between individual ones of the ISOP modules in the ISOS connection. The term 'between' may include that the respective voltage is present on an electrical connection line between the respective components and/or that the respective voltage is present at an input port and/or at an output port of the associated ISOP modules or SSTs, respectively.

For example, there is a balancing point in the two connection lines between every pair of adjacent SSTs or ISOP modules. Thus, if there are N SSTs or ISOP modules, there are N-1 intermediate points in each one of the two electric lines connecting the N SSTs or ISOP modules so that there can be 2(N-1) balancing points. N is a natural number greater than or equal to two; for example, 2 ≤ N ≤ 60 or 3 ≤ N ≤ 30 or 3 ≤ N ≤ 15.

In at least one embodiment, the voltage transformer comprises an input series and output parallel, ISOP, connection of input series and output series, ISOS, modules and/or an ISOS connection of ISOP modules and further comprises control means. At least one of the ISOP modules or the ISOS modules comprises a plurality of solid-state transformers, SSTs. The control means are configured to perform a balancing control of intermediate voltages between individual ones of the SSTs in the ISOS modules of the ISOP connection and/or between individual ones of the ISOP modules in the ISOS connection.

Thus, the voltage transformer makes use, inter alia, of the idea to control a series parallel arrangement of SST cells.

ISOP and IPOS, input parallel and output series, arrangements of SSTs allow to scale up in voltage on one side and current on the other side. This structure can be used for medium-voltage direct current, MVDC, to low-voltage direct current, LVDC, configurations, in which the cells are connected in series on the MVDC side, and in parallel on the LVDC side. Control of such arrangements is straightforward as each SST can control one given voltage to ensure the system stability, either on the LVDC side or on the MVDC side, and can even switch the DC grid forming side when needed.

However, MVDC to MVDC conversion with SST modules requires series connection on both sides, aka ISOS for input series and output series, or ISOPOS for input series output parallel output series. With classic SST control of N modules that can control N voltages, 2(N-1) neutral points cannot be all controlled at the same time which may lead to system voltage instability. With two modules in ISOS, it is possible to operate between two given DC grids, but not to grid form any of them. From three modules it is not possible to fully control intermediate voltage points with such an approach.

In the voltage transformer described herein, there is, for example, a reconfigurable and modular arrangement of SST elementary cells for allowing hybrid series and parallel connections on both sides, that is, on the low-voltage and on the high-voltage side. For example, there are two times four-series SST strings in parallel.

The control method described herein can ensure stability and intermediate voltage point balance for the voltage transformer described herein. Hence, for example, it is possible to connect MVDC to MVDC with different voltage ranges. The modular arrangement allows easy replacement and redundancy for better availability.

In short, one aspect of the voltage transformer described herein lays in a two-layer control approach for reaching a plurality of modular configurations with flexible arrangements of series and parallel connections.

With the voltage transformer described herein, a hybrid and flexible configuration of MVDC/MVDC converter based on just one SST elementary cell can be achieved.

According to at least one embodiment, one or some or all the SSTs include in internal arrangement being part of the control means. For example, each one of the respective SSTs includes the same type of internal arrangement. By means of the internal arrangements, the intermediate voltages can be measured and/or adjusted. For example, the internal arrangements each include one or a plurality of active bridges. The SSTs may be dual-active-bridge converters. This applies in particular for the SSTs in the ISOS modules of the ISOP connection.

By way of example, document WO 2023/002040 A1 discloses SSTs having active bridges; concerning the active bridges, the disclosure content of document WO 2023/002040 A1 is hereby incorporated by reference.

According to at least one embodiment, one or some or all the ISOP modules of the ISOS connection include one of the internal arrangements. It is possible that the internal arrangements are included at least in a first one and/or a last one of the series of SSTs in the ISOP modules. Thus, as stated above, the internal arrangements of at least the respective SSTs may include active bridges. Hence, the respective ISOP modules and/or SSTs are configured to measure the assigned intermediate voltages and/or to adjust the assigned intermediate voltages.

According to at least one embodiment, the control means comprises sub-units. Each one of the sub-units is electrically arranged between adjacent ones of the SSTs, for example, in the ISOS modules of the ISOP connection and/or between adjacent ones of the ISOP modules in the ISOS connection. For example, the sub-units may comprise proportional operators and may generate control signals so that the sub-units are configured to measure the assigned intermediate voltages and/or to adjust the assigned intermediate voltages. It is possible that the sub-units generate control signals and forward the control signals to the respectively assigned SSTs and/or ISOP modules so that by means of the respectively assigned SSTs and/or ISOP modules the intermediate voltages can be adjusted.

Thus, the control means can include internal arrangements being included in the SSTs or ISOP modules and/or the control means can include sub-units not being included in the SSTs or the ISOP modules but being external components located outside of the SSTs or the ISOP modules.

According to at least one embodiment, the voltage transformer is configured for transforming a first medium-voltage direct current, MVDC, to a second MVDC. The first MVDC and the second MVDC can be in different voltage ranges, and these voltage ranges may not overlap. By way of example, the first MVDC may be at a higher voltage than the second MVDC; likewise, the second MVDC may be at a higher voltage than the first MVDC.

According to at least one embodiment, at least one of the first MVDC or the second MVDC is at a voltage of at least 1 kV or of at least 10 kV or of at least 20 kV. Alternatively or additionally, an upper limit for the first MVDC and/or for the second MVDC is 100 kV or is 50 kV or is 20 kV.

According to at least one embodiment, both the first MVDC and the second MVDC are fixed. Thus, the voltage transformer is configured for a specific first MVDC and for a specific second MVDC. In this case, for example, a power provided by or handled by the voltage transformer can be set. Hence, the voltage transformer may be configured for balancing voltage control only. This may mean that the only voltages controlled within the voltage transformer are the balancing voltages. In addition, there may be power control of the voltage transformer and of the SSTs.

According to at least one embodiment, the voltage transformer is configured for controlling either the first MVDC or the second MVDC. That is, either the first MVDC or the second MVDC may be adjustable and may be set within a specific range. Hence, the voltage transformer may also be configured for balancing voltage control, in addition to controlling either the first MVDC or the second MVDC.

According to at least one embodiment, one or some or all the SSTs are two-port SSTs.

According to at least one embodiment, one or some or all the SSTs are three-port SSTs.

According to at least one embodiment, the voltage transformer comprises a hybrid arrangement of the two-port SSTs and of the three-port SSTs. The different types of SSTs may be present in separate modules or may be mixed within the same module, for example, within one or some or all the ISOP modules or the ISOS modules.

According to at least one embodiment, some or all the SSTs, like the three-port SSTs, are arranged in as stacked manner. This applies in particular for all the SSTs within one or some or all the ISOS modules.

According to at least one embodiment, in which some or all of the SSTs are arranged in a stacked manner, the voltage transformer features one or a plurality of single-winding transformers or one or a plurality of multi-winding transformers. By means of the at least one single-winding transformer and/or the at least one multi-winding transformer, DC/AC units of the SSTs can be coupled with one another on the two sides of the voltage transformer in multi-fold manners so that the specific requirements of various applications can be matched.

According to at least one embodiment, the voltage transformer comprises one or a plurality of multi-winding transformers. By means of the at least one multi-winding transformer, some or all of the SSTs of the voltage transformer or of the at least one ISOP or ISOS connection are coupled.

According to at least one embodiment, the voltage transformer further comprises an energy storage, like an integrated energy storage. The energy storage can be coupled to one or some or all the SSTs, especially the three-port SSTs. It is possible that some of the three-port SSTs have their own integrated energy storage, like a rechargeable battery.

According to at least one embodiment, one or some or all the ISOS modules and/or the ISOP modules comprise at least three and at most 30 of the SSTs.

According to at least one embodiment, one or some or all the ISOP connections and/or the ISOS connections comprise at least two or at least three or at least five of the ISOS modules or the ISOP modules, respectively. Alternatively or additionally, this number of ISOS modules or ISOP modules in the ISOP connections and/or in the ISOS connections, respectively, is at most 100 or is at most 30 or is at most 15.

According to at least one embodiment, the voltage transformer is reconfigurable. This means, for example, that individual modules can be replaced after an initial configuration and/or installation of the voltage transformer. For example, at least one of the ISOS modules and/or at least one of the ISOP modules may be replaceable. This may also mean that changes can be made on the set-up of the voltage transformer after a basic configuration of the voltage transformer has been designed and/or constructed. Thus, by way of example, the voltage transformer may have a basic design which can easily be modified to match the respective requirements of a distinct application. It may also be possible that the type of connection, that is, ISOS connection or ISOP connection or any mixture, can be changed after designing and/or installing the voltage transformer. Accordingly, the voltage transformer may have a high adaptability to applications or changing conditions of an application, possibly after being installed.

A control method for the voltage transformer is additionally provided. By means of the control method, a voltage transformer as indicated in connection with at least one of the above-stated embodiments can be controlled. Features of the voltage transformer are therefore also disclosed for the control method and vice versa.

In at least one embodiment, the control method is for controlling a voltage transformer and comprises:
Performing balancing control of the intermediate voltages between individual ones of SSTs in ISOS modules of an ISOP connection and/or between individual ones of ISOP modules in an ISOS connection.

The voltage transformer described herein may be used, for example, in a railway network, in vehicle or vessel networks or in photovoltaic systems.

In short, for example, the voltage transformer may thus enable two-layer control allowing flexible ISOS connections of ISOP modules and ISOP connections of ISOS modules. A flexible and reconfigurable arrangement of SSTs for connecting MVDC to MVDC can be achieved. Control and/or DC grid forming of one MVDC port with the two-port SST based modular arrangement is possible. Moreover, control and/or DC grid forming of two MVDC ports with the three-port SST based modular arrangement with energy storage is also possible.

A voltage transformer and a control method described herein are explained in greater detail below by way of exemplary embodiments with reference to the drawings. Elements which are the same in the individual figures are indicated with the same reference numerals. The relationships between the elements are not shown to scale, however, but rather individual elements may be shown exaggeratedly large to assist in understanding.

In the figures:
- Figure 1: is a schematic block diagram of an exemplary embodiment of a voltage transformer described herein,
- Figure 2: is a schematic representation of an exemplary embodiment of a voltage transformer described herein utilizing an ISOP connection of ISOS modules,
- Figure 3: is a schematic representation of an interconnection of SSTs in exemplary embodiments of voltage transformers described herein,
- Figures 4 to 6: are schematic representations of exemplary embodiments of control schemes for voltage transformers described herein as shown in Figure 2,
- Figure 7: is a schematic representation of an exemplary embodiment of a voltage transformer described herein utilizing an ISOS connection of ISOP modules,
- Figures 8 and 9: are schematic representations of exemplary embodiments of control schemes for voltage transformers described herein,
- Figures 10 and 11: are schematic representations of exemplary embodiments of voltage transformers described herein, and
- Figure 12: is a schematic block diagram of an exemplary embodiment of a control method for voltage transformers described herein.

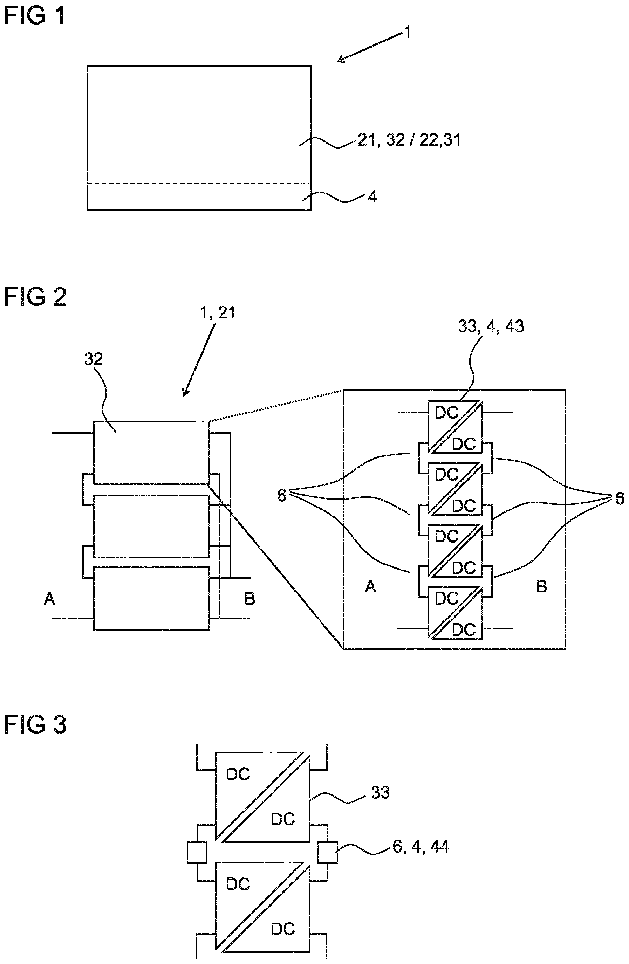

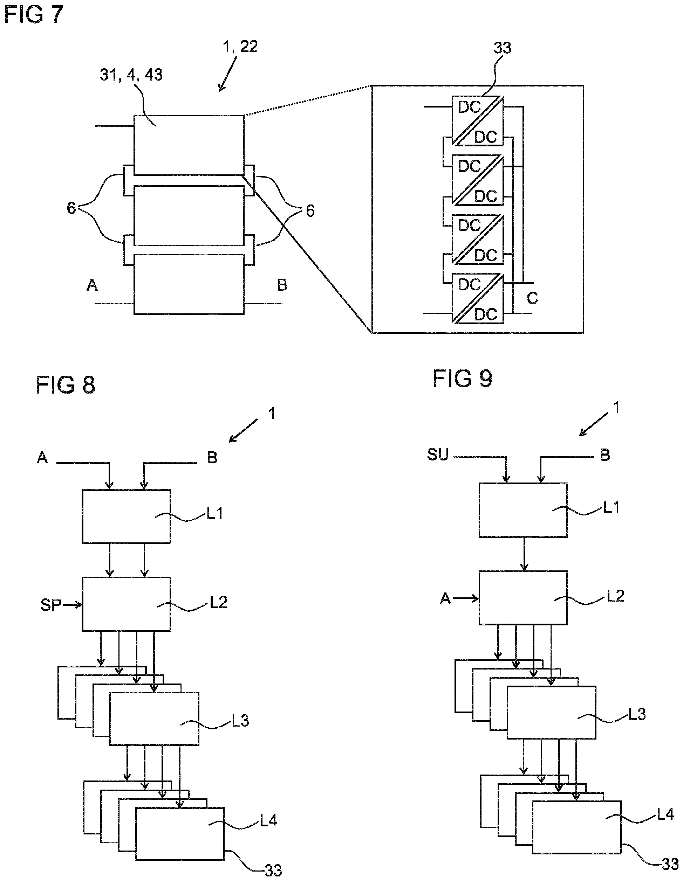

Figure 1 illustrates an exemplary embodiment of a voltage transformer 1. The voltage transformer 1 comprises an input series - output parallel, ISOP, connection 21 of input series - output series, ISOS, modules 32, see in more detail Figure 2. Alternatively, the voltage transformer 1 and/or an ISOS connection 22 of ISOP modules 31, see in more detail Figure 7. However, mixtures of such ISOP connections 21 and ISOS connections 22 are in principle also possible, for example, if an additional layer may be used. Moreover, the voltage transformer 1 comprises control means 4. The control means 4 may integrally be included in the ISOP connections 21 and/or ISOS connections 22.

At least one of the ISOP modules 31 or the ISOS modules 32 comprises a plurality of solid-state transformers33, SSTs for short. The control means 4 are configured to perform a balancing control of intermediate voltages between individual ones of the SSTs 33 in the ISOS modules 32 of the ISOP connection 21 and/or between individual ones of the ISOP modules 31 in the ISOS connection 22.

Figure 2 illustrates the ISOP connection 21 of ISOS modules 33. There are M of the ISOS modules 32 in parallel. For example, all the ISOS modules 32 are of the same type and, thus, may have the same number of SSTs 33, also referred to as SST modules. Thus, each one of the ISOS modules 32 may comprise N SSTs 33. Accordingly, there can be M x N SST modules, N SST modules in series an M in parallel. One of the ISOS modules 32 is shown in more detail on the right side of Figure 2. For example, 3 ≤ N ≤ 15 and/or 3 ≤ M ≤ 15, wherein M and N are natural numbers.

At a first side of the voltage transformer 1, there is a first MVDC A and at a second side there is a second MVDC B. For example, the MVDCs A, B have voltages of at least 10 kV and of at most 50 kV.

Between adjacent SSTs 33 in the ISOS modules, there are two balancing points 6 at which there is in each case a balancing voltage to be controlled. Hence, in case of N SSTs 33, there may be 2(N-1) of the balancing points 6. For measuring and adjusting the balancing voltage at the balancing points 6, the SSTs 33 each may include an internal arrangement 43. All the internal arrangements 43 may make the control means 4. For example, the internal arrangements 43 are based on multi-active bridges, not shown in detail.

Hence, this configuration features an ISOP connection 21 of ISOS modules 32, and a high-level configuration is fully controllable, that is, enabled by ISOP control. A low-level configuration requires a balancing control of the balancing voltage at the balancing points 6 which is enabled by means of the control means 4, 43.

Otherwise, the same as to Figure 1 may also apply to Figure 2, and vice versa.

In Figure 3 it is shown that the control means 4 may be realized by external sub-units 44, that is, by additional components placed between the SSTs 33. Such sub-units 44 may be based on proportional operators. The sub-units 44 may be present instead of the internal arrangements 43 as depicted in Figure 2, or there can by any mixture of the sub-units 44 and the internal arrangements 43. The same applies for all other embodiments.

Otherwise, the same as to Figure 2 may also apply to Figure 3, and vice versa.

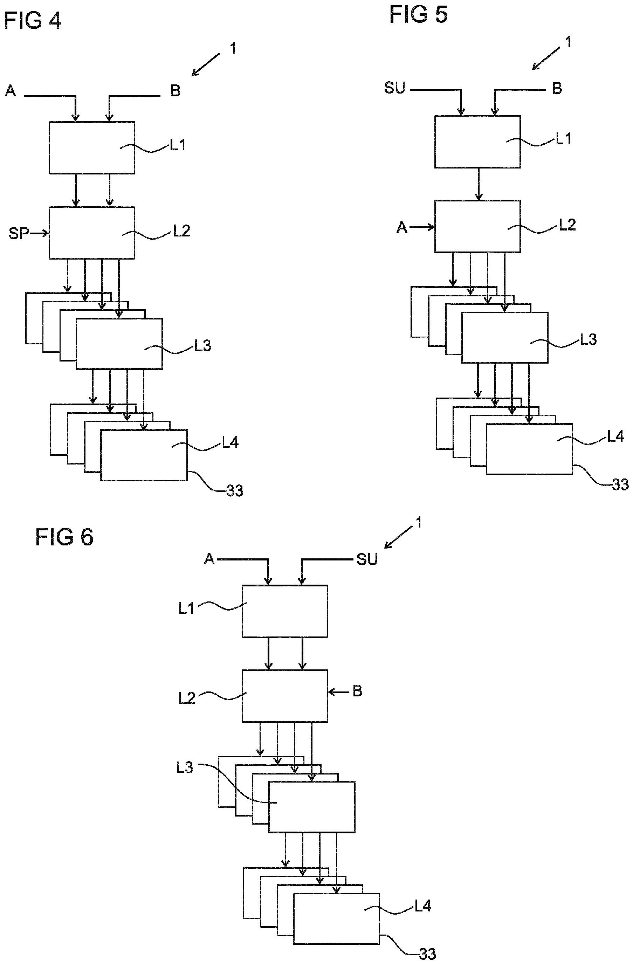

In Figures 4 to 6, some control schemes for voltage transformers 1 of the type as shown in Figure 2 are illustrated. According to Figure 4, both the high MVDC voltage A as well as the low MVDC voltage B are fixed. Thus, at a Level 1, there is no voltage control; that is, Level 1 may simply be omitted in this case, but is drawn for better comprehensibility between the Figures 4 to 6. At a Level 2, a power setpoint SP is provided, and high-level power control is performed. At a Level 3, low-level power control can be achieved while at a Level 4, single SST power control is done. Thus, in context of Figure 4 only balancing voltage control is applied as the only voltage control, and this is done on Level 3 within the ISOS modules 32.

In Figure 5, the low, second MVDC B is controlled and a voltage setpoint SU is provided to achieve MVDC voltage control at Level 1. The high, first MVDC A is provided at the Level 2. As in Figure 4, at Level 3 low-level power control can be achieved and at a Level 4 single SST power control can be done. Thus, in context of Figure 5 balancing voltage control is applied in addition to low MVDC voltage control so that there are two types of voltage being controlled.

The scheme of Figure 6 corresponds to the scheme of Figure 5, but instead of the low, second MVDC B the high, first MVDC A is controlled by providing the voltage setpoint SU, and the low, second MVDC B is fixed.

Otherwise, the same as to Figures 1 to 3 may also apply to Figures 4 to 6, and vice versa.

The voltage transformer of Figure 7 features an ISOS connection 22 of ISOP modules 31.

Thus, there are M of the ISOP modules 31 in series. For example, all the ISOP modules 31 are of the same type and, thus, may have the same number of SSTs 33. Thus, each one of the ISOS modules 31 may comprise N SSTs 33. Hence, there can be M x N SST modules, N SST modules in series an M in parallel. One of the ISOP modules 31 is shown in more detail on the right side of Figure 7. Again, like in Figure 2, at the first side of the voltage transformer 1, there is the first MVDC A and at the second side there is the second MVDC B. The MVDCs A, B may have voltages of at least 10 kV and of at most 50 kV. For example, 2 ≤ N ≤ 30 and/or 2 ≤ M ≤ 30 or alternatively 3 ≤ N ≤ 15 and/or 3 ≤ M ≤ 15, wherein M and N are natural numbers.

Between adjacent ISOP modules 31 in the ISOS connection 22, there are two balancing points 6 at which there is in each case the balancing voltage to be controlled. Hence, in case of N ISOP modules 31, there may be 2(N-1) of the balancing points 6. For measuring and adjusting the balancing voltage at the balancing points 6, at least terminal SSTs 33 in the ISOP modules 31 may include at least one of the internal arrangements 43 or alternatively there can be the sub-units 44 between the ISOP modules similar to what is shown in Figure 3. All the internal arrangements 43 may make the control means 4. For example, the internal arrangements 43 can be based on multi-active bridges, again not shown in detail.

Hence, this configuration features an ISOS connection 22 of ISOP modules 31, and a high-level configuration is fully controllable, that is, enabled by ISOP control. The low-level configuration requires the balancing control of the balancing voltages at the balancing points 6 which is enabled by means of the control means 4, 43, 44.

Otherwise, the same as to Figures 1 to 6 may also apply to Figure 7, and vice versa.

The control schemes of Figures 8 and 9 refer to a voltage transformer 1 of the type shown in Figure 7, and the representation of Figures 8 and 9 corresponds to the representation of Figures 4 to 6.

Like in Figure 4, in Figure 8 both the MVDCs A, B are fixed so that there is no voltage control at Level 1, and at Level 2 high-level balancing control is performed by means of the power setpoint SP. At Level 3, low-level power control is performed. At Level 4, single SST power control is done. Thus, in context of Figure 8 only balancing voltage control is applied as the only voltage control, and this is done on Level 2 between the ISOP modules 31.

In Figure 9, either the low, second MVDC B is controlled and a voltage setpoint SU is provided to achieve MVDC voltage control at Level 1, and the high, first MVDC A is provided at the Level 2, or the high, first MVDC A is controlled by providing the voltage setpoint SU, and the low, second MVDC B is fixed. As in Figure 8, at Level 2 high-level balancing control is done and at Level 3 low-level power control is performed. Again, at a Level 4 single SST power control can be done. Otherwise, reference is made to Figure 8.

Otherwise, the same as to Figures 1 to 7 may also apply to Figures 8 and 9, and vice versa.

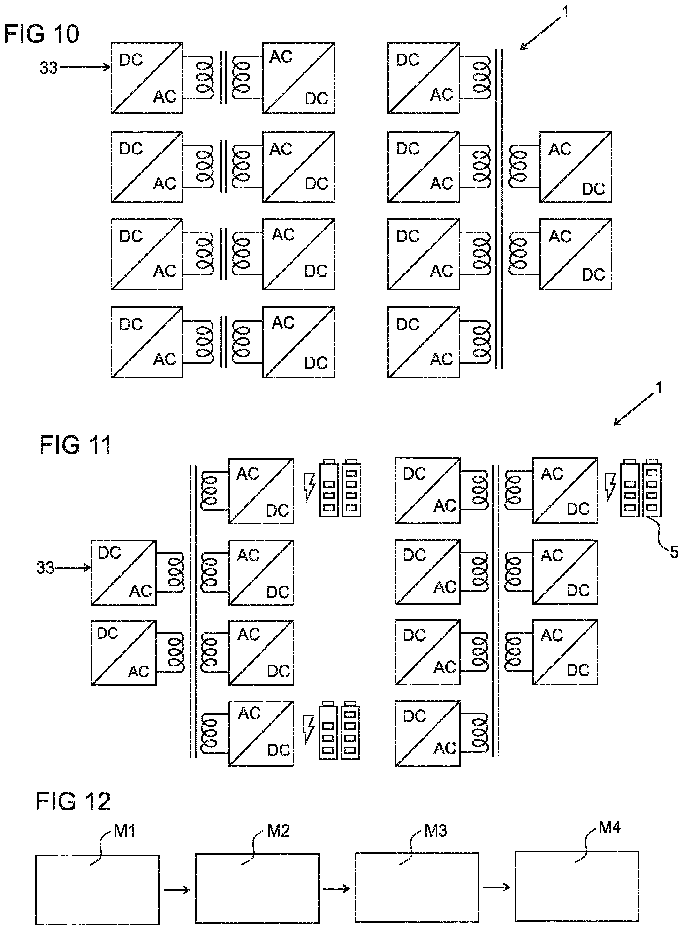

Figures 10 and 11 show further embodiments of the voltage transformer 1. Both in the ISOP connection 21 configurations and in the ISOS connection 22 configurations, an internal set-up can be done with individual SSTs 33 and single medium-frequency transformers, MFTs, see Figure 10, left side. However, this can also be reached with multi-winding MFTs, see Figure 10, right side. For example, in the multi-winding case, a plurality of set-ups can be drawn with various winding ratios, and possibly different winding counts on the primary and the secondary side.

Especially, in Figure 10, left side, it is shown that the voltage transformer 1 can be composed of a plurality of single-winding transformers. Although four single-winding transformers are shown in Figure 10, of course there can be different numbers of transformers. In Figure 10, right side, it is illustrated that just one multi-winding transformer is used, possibly with different numbers of DC/AC units on the two sides of the multi-winding transformer. In addition to what is shown in Figure 10, there can be combinations of one or several single-winding transformers with one or several multi-winding transformers. The same applies for the other embodiments. Thus, stacked SSTs with one or more single-winding transformers or one multi-winding transformer or a plurality of multi-winding transformers can be used herein for the voltage transformer 1 and the ISOP and/or ISOS connections 21, 22.

In context of Figure 11, three-port SSTs 33 with an integrated energy storage 5 are used. This is possible both in the ISOP connection 21 configurations and in the ISOS connection 22 configurations. There can be just one energy storage 5, see Figure 11, left side, or there is a plurality of the energy storages 5, see Figure 11, right side. Different unit configurations of the SSTs 33 on the first side and the second side of the voltage transformer 1 are possible. For example, the number of DC/AC units on the first side can be smaller or alternatively larger or also the same as the number of DC/AC units on the second side of the voltage transformer 1.

With the energy storage 5 it is possible to control voltages on both sides of the SSTs, for example. By way of example, stacked three-port SSTs 33 can control voltages in full serial-serial configurations, therefore reaching all MVDC levels is enabled.

Further, hybrid arrangements of two-port SSTs 33 and three-port SSTs 33 can suit various applications with high flexibility and optimized costs.

When the energy storage is empty, or during charging, then previously described balancing control can be applied.

Otherwise, the same as to Figures 1 to 9 may also apply to Figures 10 and 11, and vice versa.

Finally, in Figure 12 an embodiment of the control method is schematically shown.

In optional method step M1, the voltage transformer 1 is design and/or provided and/or installed. Hence, after method step M1 the voltage transformer 1 can have a particular configuration.

In method step M2, balancing control of the intermediate voltages between the individual ones of the SSTs 33 in the ISOS modules 32 of the ISOP connection 21 and/or between the individual ones of the ISOP modules 31 in the ISOS connection 22 is performed. Thus, by doing so a particularly stable mode of operation of the voltage transformer 1 can be achieved.

In optional method step M3, the configuration of the voltage transformer 1 is changed. This may be done by replacing one or some of the modules 31, 32 and/or by modifications in a control scheme which may be achieved by a software update, for example.

In optional method step M4, the voltage transformer 1 is operated in accordance with the reconfiguration done in method step M3.

Otherwise, the same as to Figures 1 to 11 may also apply to Figure 12, and vice versa.

The invention described here is not restricted by the description on the basis of the exemplary embodiments. Rather, the invention encompasses any new feature and also any combination of features, which includes in particular any combination of features in the patent claims, even if this feature or this combination itself is not explicitly specified in the patent claims or exemplary embodiments.

### List of Reference Signs

- 1: voltage transformer
- 21: ISOP connection
- 22: ISOS connection
- 31: ISOP module
- 32: ISOS module
- 33: solid-state transformer
- 4: control means
- 43: internal arrangement
- 44: external sub-unit
- 5: integrated energy storage
- 6: balancing point
- A: first MVDC
- B: second MVDC
- C: low-voltage direct current
- L..: level
- M: method step
- SP: power setpoint
- SU: voltage setpoint

## Claims

1. A voltage transformer (1) comprising:
- an input series and output parallel, ISOP, connection (21) of input series and output series, ISOS, modules (32) and/or an ISOS connection (22) of ISOP modules (31), and
- control means (4),
wherein
- at least one of the ISOP modules (31) or the ISOS modules (32) comprises a plurality of solid-state transformers, SSTs (33), and
- the control means (4) are configured to perform a balancing control of intermediate voltages between individual ones of the SSTs (33) in the ISOS modules (32) of the ISOP connection (21) and/or between individual ones of the ISOP modules (31) in the ISOS connection (22).

2. The voltage transformer (1) of the preceding claim,
wherein at least some of the SSTs (33) include an active bridge, the active bridges being part of the control means (4) ,
wherein these SSTs (33) are configured to measure the intermediate voltages and/or to adjust the intermediate voltages.

3. The voltage transformer (1) of any one of the preceding claims,
wherein the control means (4) comprises sub-units (44), each one of the sub-units (44) being electrically arranged between adjacent ones of the SSTs (33) in the ISOS modules (32) of the ISOP connection (21) and/or between adjacent ones of the ISOP modules (31) in the ISOS connection (22).

4. The voltage transformer (1) of any one of the preceding claims,
being configured for transforming a first medium-voltage direct current, MVDC, to a second MVDC.

5. The voltage transformer (1) of the preceding claim,
wherein the first MVDC and the second MVDC each have a voltage of at least 10 kV and of at most 50 kV.

6. The voltage transformer (1) of any one of the two preceding claims,
wherein both the first MVDC and the second MVDC are fixed,
wherein the voltage transformer (1) is configured for balancing voltage control only.

7. The voltage transformer (1) of claim 4 or 5,
wherein the voltage transformer (1) is configured for controlling either the first MVDC or the second MVDC, and
wherein the voltage transformer (1) is also configured for balancing voltage control.

8. The voltage transformer (1) of any one of the preceding claims,
wherein at least some of the SSTs (33) are two-port SSTs and/or at least some of the SSTs (33) are three-port SSTs.

9. The voltage transformer (1) of the preceding claim, comprising a hybrid arrangement of the two-port SSTs and of the three-port SSTs.

10. The voltage transformer (1) of any one of the preceding claims,
wherein at least some of the SSTs (33) are arranged in a stacked manner featuring a single-winding transformer or one or a plurality of multi-winding transformers.

11. The voltage transformer (1) of any one of the preceding claims,
comprising a multi-winding transformer by means of which at least some of the SSTs (33) are coupled.

12. The voltage transformer (1) of any one of the preceding claims,
further comprising an integrated energy storage (5) coupled to at least one of the SSTs (33).

13. The voltage transformer (1) of any one of the preceding claims,
wherein the ISOS modules (32) and/or the ISOP modules (31) each comprise at least three and at most 60 of the SSTs (33).

14. The voltage transformer (1) of any one of the preceding claims,
which is reconfigurable.

15. A control method for controlling a voltage transformer (1) according to any one of the preceding claims comprising: performing balancing control of the intermediate voltages between the individual ones of the SSTs (33) in the ISOS modules (32) of the ISOP connection (21) or between the individual ones of the ISOP modules (31) in the ISOS connection (22).
